# FASCICULE DE BREVET EUROPEEN

(11) **EP 0 453 533 B1**
(45) Date de publication et mention de la délivrance du brevet: **07.09.1994**
(21) Numéro de dépôt: 90916007.9
(22) Date de dépôt: 09.11.1990
(51) Int. Cl.: B23Q 3/10

(54) **MACHINE D'USINAGE OU DE MESURE AVEC UN DISPOSITIF DE FIXATION DE LA PIECE SUR LA TABLE DE TRAVAIL**
NUMERISCH GESTEUERTE MASCHINE ZUM BEARBEITEN ODER MESSEN MIT EINER BEFESTIGUNGSVORRICHTUNG FÜR EIN WERKSTÜCK AUF EINEM WERKTISCH
NUMERICALLY-CONTROLLED MACHINE TOOL OR MEASURING MACHINE PROVIDED WITH A WORKPIECE CLAMPING DEVICE FOR A WORK TABLE

(30) Priorité: 09.11.1989 CH 4040/89; 15.05.1990 CH 1634/90
(43) Date de publication de la demande: 30.10.1991
(73) Titulaire: CHARMILLES TECHNOLOGIES S.A., 1217 Meyrin 1 (CH)
(72) Inventeur: MOUSSLI, Omar, CH-1213 Petit-Lancy (CH); PUGIN, Gérard, CH-1213 Onex (CH)
(74) Mandataire: Wiedmer, Edwin, Dr.
(86) Numéro de dépôt international: CH9000259
(87) Numéro de publication internationale: WO9107252

(56) Documents cités:
- EP-A- 0 203 888
- DE-A- 3 624 148
- FR-A- 2 521 892

## Description

La présente invention a trait à la fixation d'une pièce sur la table de travail d'une machine d'usinage ou de mesure, en particulier d'une machine de découpage par électroérosion.

Rappelons que dans ce type d'usinage, la pièce à usiner est fixée sur une table solidaire du fond d'un bac de travail recueillant le liquide d'usinage. Ce bac peut être disposé sur un dispositif à mouvements croisés, actionné par la commande numérique de la machine dans le plan d'usinage, selon une trajectoire donnée. L'électrode-outil est montée sur une colonne s'élevant du bâti de la machine; il peut s'agir d'un fil-électrode, tendu entre deux têtes d'usinage et défilant perpendiculairement ou en oblique par rapport au plan d'usinage, et dont l'inclinaison et la tension mécanique peuvent varier en cours d'usinage selon les ordres donnés par la commande numérique.
Il est bien entendu qu'inversement la table, et donc la pièce, peut être fixe et l'électrode-outil animée dans le plan d'usinage d'un mouvement selon une trajectoire donnée . Toute autre solution mixte produisant un mouvement relatif de l'outil par rapport à la pièce est également possible. La pièce doit être positionnée avec une grande précision par rapport au système de référence de la machine. Ceci reste vrai aussi pour d'autres techniques d'usinage ou de mesure commandées numériquement.
Ceci s'applique également aux cas où c'est l'outil ou l'organe de mesure qui est fixé sur la table de travail et la pièce à usiner qui est fixée à la colonne du bâti de la machine.

Dans certains des dispositifs connus, la pièce est positionnée grâce à des plaques-support fixées sur des piliers, en granit par exemple, eux-mêmes fixés au fond du bac de travail. Ces plaques définissent la surface d'usinage. Elles comportent un épaulement situé dans un même plan et supportant la pièce à fixer. Celle-ci est soutenue également par des supports-butées, vissés sur une ou plusieurs barres-support qui reposent également sur les épaulements des plaques. Ces plaques et ces barres comportent des orifices qui facilitent la fixation des barres et de la pièce sur les plaques et celle des supports-butées sur les barres et permettent d'immobiliser la pièce par des vis, brides ou clavettes, elles-aussi vissées sur ces barres ou ces plaques.

Dans d'autres dispositifs connus, la pièce n'est plus posée sur des épaulements et/ou butées et bridée, mais elle est maintenue par serrage. Les plaques-support sont munies de traverses percées de place en place par des orifices disposés à intervalles réguliers et montées en position de référence. Un outil intermédiaire ou adapteur permet de relier la pièce à fixer à l'une de ces traverses. L'adapteur est percé à sa surface inférieure d'une rainure. La forme de celle-ci lui permet de glisser le long des traverses de référence tout en épousant étroitement celles-ci. Il est maintenu en position sur ces traverses et fixé grâce à des organes appropriés, connus dans l'état de la technique. Des éléments appropriés de type connu (étau, cadre, prisme ou flasque de serrage, par exemple) brident ou serrent la pièce en position selon trois axes de coordonnées de référence. Ceci est en général réalisé après un ajustement précis effectué hors de la machine, à une station de préréglage.

Dans tous ces systèmes connus, la pièce est fixée par des organes (clavettes, brides, vis, adapteur) protubérants, qui dépassent la surface d'usinage définie par la face supérieure des plaques-support. Ils constituent ainsi des obstacles, et donc un risque de collision, lors des mouvements relatifs pièce à usiner - outil commandés numériquement. De plus ils réduisent l'accessibilité aux guides et buses d'injection.
Un autre inconvénient des systèmes connus, est que l'ajustement précis d'une pièce demande à chaque fois des opérations compliquées; sa face inférieure doit être en général ajustée de façon à être rigoureusement parallèle au plan (X, Y) de la machine. L'un de ses bords est en général aligné selon l'un des axes de la machine, par exemple l'axe X. De plus, il faut régler avec exactitude sa cote verticale (c'est-à-dire sa position selon l'axe Z de la machine). Ces opérations sont trop longues pour qu'il soit économique de les effectuer directement sur la machine. Il faut prévoir un poste externe de préréglage permettant de positionner la pièce en la serrant sur un adapteur ou, pour les grandes pièces, en la bridant sur des traverses de serrage à l'extérieur de la machine à commande numérique. Des éléments y simulent la base de la machine et effectuent les mesures nécessaires au contrôle de l'ajustement.

Le premier but de la présente invention était donc un dispositif permettant de maintenir la surface d'usinage entièrement dégagée, ce qui élimine tout risque de collision avec la tête d'usinage supérieure de la machine, en particulier lors des usinages sur les bords de la pièce et permet d'accéder librement aux organes de cette tête, tels les guides et buses d'injection présents sur une machine EDM à fil.

Un autre but de la présente invention était un dispositif permettant d'effectuer rapidement et avec une grande précision la mise en place de la pièce à usiner ou à mesurer, de préférence directement sur la machine, sans devoir effectuer de préréglage, sans devoir la serrer dans un outil intermédiaire ou adapteur et la transporter d'une station externe à sa position définitive sur la machine.

Ceci est réalisé grâce au dispositif défini à la revendication 1.

Le rail de référence, en général en forme de parallélépipède rectangle, est fixé par tous moyens appropriés, connus dans l'état de la technique, à la table de travail. Il peut en particulier être fixé sur des piliers, en granit par exemple, montés sur cette table de travail et munis d'une rainure dans laquelle ce rail coulisse et peut être fixé dans une position donnée. Sa position est en général ajustée de manière que sa face inférieure soit dans le plan défini par les axes de coordonnées X et Y de la machine, de préférence en alignant le bord inférieur de sa face latérale munie de la rainure avec l'axe X ou Y de la machine. Ce positionnement peut être effectué une fois pour toutes, par exemple au moment du montage de la machine.

Les rainures latérales, évidemment parallèles à la face inférieure des rails, ont en général une section constante qui peut présenter toutes sortes de profils. Il est le même pour les rails mobiles et le rail de référence si on désire utiliser des éléments coulissants ayant tous le même type de doigts mobiles. Ce profil est dessiné de manière à coopérer avec un profil donné de doigt afin que ces derniers puissent entrer et sortir facilement des rainures par un mouvement transversal, c'est-à-dire sans qu'il soit nécessaire de les introduire par l'une des extrémités de la rainure. De plus, la rainure et le doigt doivent être profilés de façon à ce que le doigt puisse être immobilisé dans une position précise sur le rebord de cette rainure.

Selon un mode de réalisation particulièrement avantageux, le rebord inférieur de la rainure présente une surface d'appui oblique. Lorsque le doigt d'un élément coulissant est actionné vers le bas, il glisse le long de cette pente oblique et s'avance ainsi vers les flancs de la rainure. La surface latérale de l'élément coulissant de laquelle jaillit ce doigt vient alors se presser contre le rail, ce qui assure une fixation en position précise de cet élément coulissant.

Des éléments coulissants de liaison permettent de monter des rails mobiles perpendiculairement au rail fixe de manière que toutes leurs faces inférieures soient dans le plan de référence (X, Y). Ils permettent aussi de monter des rails mobiles perpendiculairement à ces premiers rails mobiles, ceux-ci servant de rails de liaison entre le rail fixe de référence et des rails mobiles parallèles à ce dernier.
Ces éléments coulissants permettent de fixer en position des pièces de toute dimension, poids et forme. Ainsi, ils peuvent aussi servir d'appui pour de grandes pièces, et de blocs de bridage à condition que leur face supérieure soit munie des orifices appropriés. Des pièces de raccord ou cales peuvent être prévues afin de surélever les brides lorsque la pièce à fixer est trop haute. Des attaches de tout profil approprié peuvent être montées sur ces éléments, soit sur les emplacements prévus pour les brides, soit par vissage latéral. On peut ainsi maintenir des pièces de forme quelconque, que ce soit par serrage, bridage, ou grâce à l'appui offert par une butée ménagée sur ces éléments. Il peut s'agir de pièces non parallélépipèdiques, tels des cylindres par exemple. Ainsi les éléments coulissants du dispositif de la présente invention peuvent aussi être utilisés pour fixer des pièces qui n'ont pas de base plate ou qui n'ont pas de face latérale sensiblement perpendiculaire à une base plate.

Selon certaines variantes, on prévoit des supports-butée amovibles comportant un épaulement agencé pour référencer la pièce à fixer en hauteur et pour la disposer de manière que sa base soit dans le plan de référence. Dans le cas où la base de la pièce présente un bord rectiligne, ce bord peut être disposé dans l'angle formé par l'épaulement du support-butée et être ainsi aligné avec précision avec l'un des axes de référence de la machine.

Selon d'autres variantes, la pièce est serrée grâce à des cavaliers-étaux qui présentent un rebord sur le côté de la charnière du mors ainsi qu'un évidement formant rebord sur le côté opposé; ces rebords sont situés avec précision dans un même plan, ce plan étant parallèle à leur face destinée à être en regard du rail de référence. De plus, ce plan est situé à la même distance de cette face pour les deux étaux d'une même paire. Ainsi, dans le cas d'une pièce ayant une face latérale perpendiculaire à sa base, le profil des étaux permet de la disposer de manière que cette face soit rigoureusement parallèle à la face du rail portant la rainure. Aussi, lorsque la pièce à fixer comporte un angle droit, celui-ci peut être positionné avec précision selon le système d'axes de référence de la machine.
De plus, toujours selon cette variante, un étau peut servir à serrer deux pièces, l'une venant s'appuyer sur son évidement, l'autre étant comprimée par le mors. Plusieurs de ces étaux peuvent être montés en série sur un même rail et serrer plusieurs pièces, de formes et de dimensions différentes. La distance entre deux étaux peut varier de 13 mm à pratiquement la longueur du rail. Comme ils sont très peu encombrants, on peut ainsi utiliser toute la longueur des rails disposés sur la surface de travail afin de positionner un nombre maximum de pièces.

Selon d'autres variantes, la pièce peut être maintenue en position sans faire appel à des étaux, car le dispositif selon la présente invention peut faire appel à des éléments coulissants de types les plus divers, mais présentant toujours le doigt et la butée qui les immobilisent le long d'un rail, dans une position précise: élément sans butée d'appui mais avec un oeilleton de centrage afin d'aligner le fil-électrode d'une machine EDM à découper, ou organe permettant de pincer une pièce mince entre une butée d'appui et une bride, par exemple.

Selon un mode de réalisation préféré, afin de faciliter le basculement ou la rétraction éventuels d'organes montés sur la tête d'usinage ou de mesure de la machine, (par exemple la buse d'injection d'une machine EDM à fil), on profile tout élément des accessoires coulissants dépassant des faces supérieures ou inférieures des rails de façon à supprimer tout angle vif.

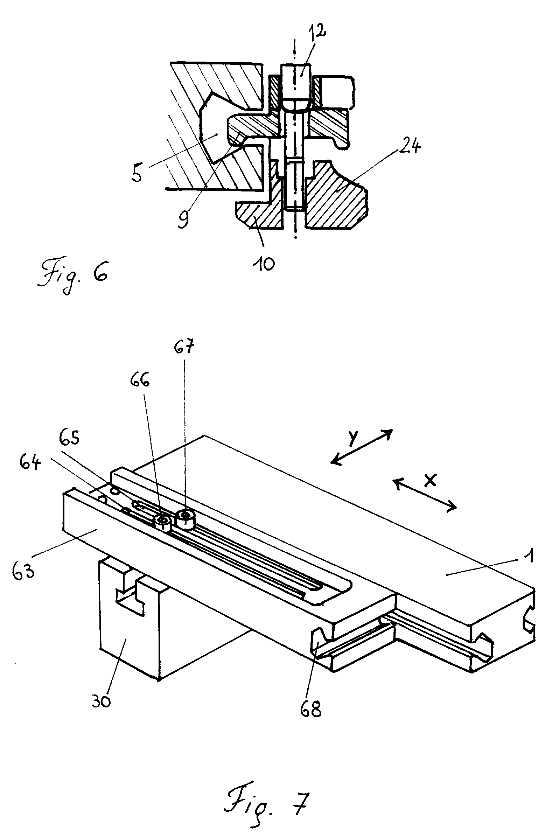

Le dispositif selon la présente invention peut aussi faire appel à des rails destinés à être montés sans rail de référence, présentant des moyens agencés pour que leur face inférieure soit positionnée dans le plan de référence et munis à au moins l'une de leurs extrémités d'une rainure parallèle à leur face inférieure et de même profil que la rainure du rail de référence. Ils peuvent être positionnés directement dans une rainure réalisée dans les piliers de la table de travail, par exemple. La rainure ménagée à leur extrémité est ainsi parallèle à celle présentée par le pilier supportant le rail. De plus, ces rails peuvent avantageusement être évidés de leur face supérieure à leur face inférieure selon un profil permettant de régler facilement leur positionnement en les faisant coulisser selon les axes de coordonnées du système de référence de la machine.
Ainsi, comme illustré à la figure 7, la rainure des piliers est parallèle à l'axe Y de la machine ; ces rails sont alors disposés parallèlement à l'axe X et leurs rainures en extrémité parallèlement à l'axe Y. Grâce à leurs évidements longitudinaux parallèles à l'axe X, ils peuvent coulisser non seulement le long de la rainure du pilier, c'est-à-dire parallèlement à l'axe Y, mais aussi parallèlement à l'axe X.

On voit que le dispositif selon la présente invention peut présenter une infinité de variantes. Seuls quelques-uns des nombreux modes d'exécution possibles sont illustrés à titre d'exemple dans le dessin annexé.

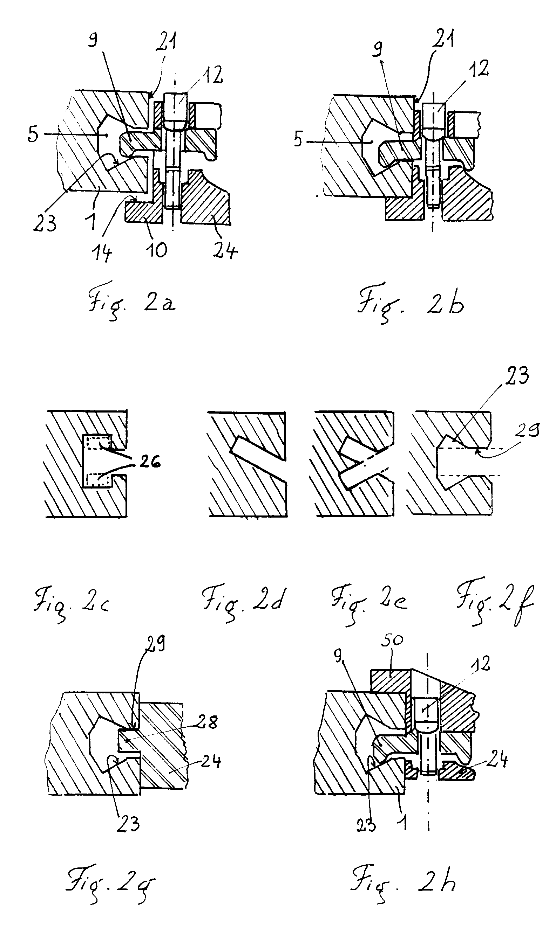

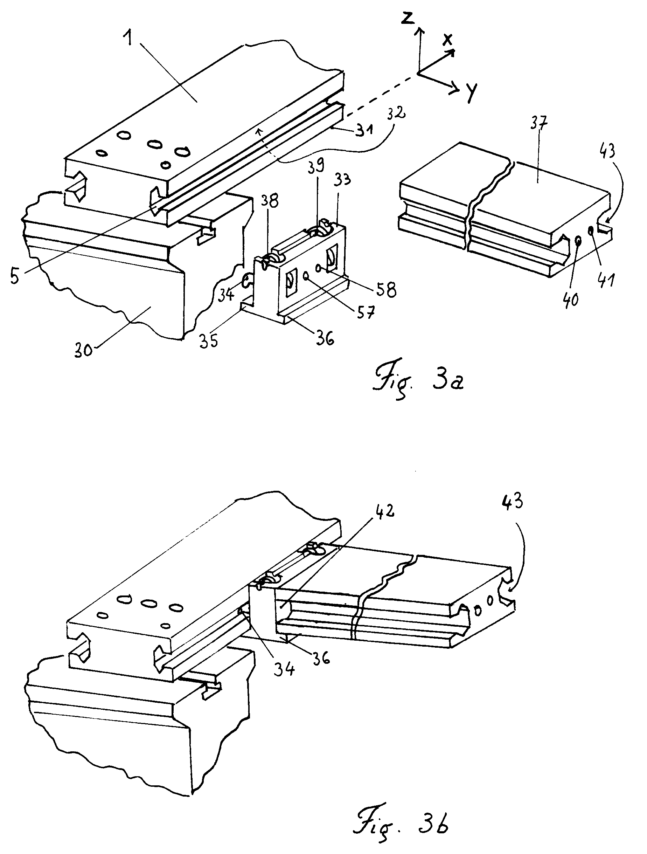

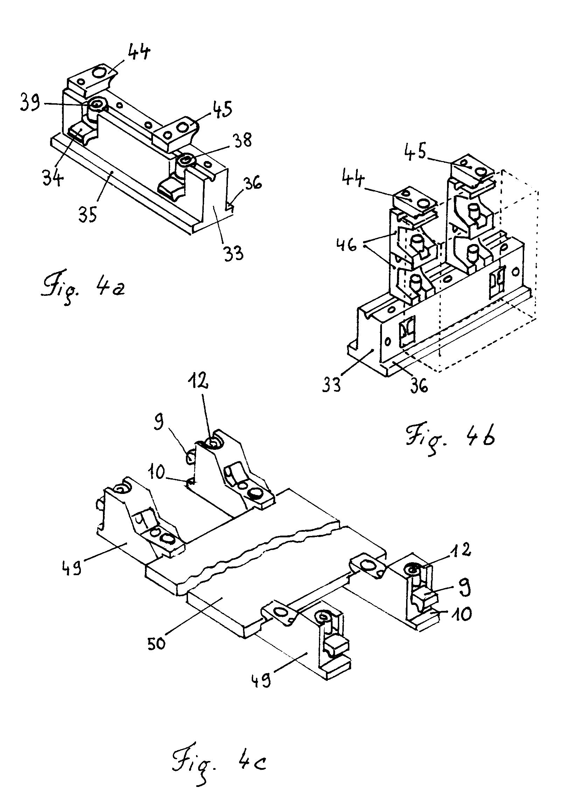

Les figures 1a, 1b et 1c schématisent le serrage latéral d'une pièce entre deux étaux avec un dispositif selon la présente invention. Les figures 2a à 2h représentent des formes d'exécution de rainures et de doigts mobiles coopérant avec une butée fixe particulièrement avantageux pour un dispositif selon la présente invention. Les figures 3a et 3b illustrent un exemple d'élément de liaison qui permet de monter deux rails perpendiculairement l'un à l'autre. Les figure 4a à 5b rassemblent divers types d'éléments de bridage pouvant être utilisés avantageusement dans un dispositif selon la présente invention.
La figure 5c schématise un élément coulissant avec un oeilleton de centrage.
La figure 6 montre la section d'un accessoire avec doigt ne présentant plus d'excroissance à angle vif.
La figure 7 représente un rail mobile avec évidements longitudinaux, destiné à être monté directement , disposé le long d'un rail de référence.

La figure la représente une portion d'un rail 1, une butée amovible 2, ainsi que deux étaux 3 et 4 , dont l'un, (l'étau 3) est sur le point d'être enfilé dans la rainure 5 du rail 1. La base du rail 1 se trouve dans le plan de référence (X, Y). Le corps de la butée 2 est prolongé à sa base par un double épaulement 10 et 11. Le doigt 9 est assez petit pour être introduit de front dans la rainure 5. Il suffit d'actionner la vis 12 pour abaisser ce doigt 9 vers l'appui 10 jusqu'à ce que le doigt 9 et la butée 10 enserrent fermement la portion 13 du rail, ce qui immobilise la butée 2 à cet endroit du rail. La face supérieure 14 de l'appui 11 est alors dans le prolongement de la base du rail, c'est-à-dire dans le plan de référence (X, Y) (Voir aussi la figure 1b). Afin d'augmenter sa durée de vie , la tête de la vis 12 est , de préférence , évidée profondément.
Chacun des étaux 3 et 4 comporte un mors 7 pouvant être actionné autour de la charnière 15. Une barrette 6, dont le profil est approprié à celui de la rainure 5, leur permet de glisser le long de cette dernière. La longueur des vis 16 reliant cette barrette 6 au corps de l'étau est réglée de manière que ce dernier vienne au contact de la face latérale du rail lorsque la barrette 6 est engagée dans la rainure 5. Le corps de chaque étau 3 et 4 présente un évidement 8 destiné à recevoir l'une des arêtes de la pièce à serrer. Il présente également un rebord situé dans l'angle portant la charnière 15. Ce rebord 19 est dans le même plan que la face 18 de l'évidement 8, et ce plan est parallèle à la face du rail 1 portant la rainure 5.

La figure 1b représente les mêmes éléments que la figure 1a, ainsi qu'une pièce 20 en cours de fixation.
L'étau 3 a déjà été introduit dans la rainure 5 et immobilisé dans celle-ci grâce à l'écrou 27. La pièce 20 a été appuyée sur l'épaulement 11 de la butée 2 et contre la face 18 de l'évidement 8 de cet étau 3. On introduit ensuite l'étau 4 dans la rainure 5 et on l'immobilise contre la pièce 20 grâce à la vis 27 . Une arête de cette pièce 20 vient alors reposer contre le rebord 19 de cet étau 4. En actionnant le mors 7 de l'étau 4 grâce à la vis 25, la pièce 20 est serrée entre l'évidement 8 de l'étau 3 et le mors 7 de l'étau 4. La base de cette pièce 20 s'appuyant sur la face 14 de la butée 2 qui est dans le plan (X, Y) est ainsi également dans ce plan de référence. La pièce 20 est ainsi référencée en hauteur. Deux arêtes de la pièce 20 viennent reposer contre le rebord 19 de l'un des étaux et la face 18 de l'évidement 8 de l'autre étau; la face 17 de la pièce 20 reliant ces arêtes est ainsi rigoureusement parallèle à la face latérale 21 du rail 1. L'arête 22 de la pièce 20, commune à sa base et à sa face 17 est ainsi alignée avec précision selon une parallèle à l'axe de référence X. De plus, la largeur 1 du corps des étaux étant connue avec précision (en tenant compte de la profondeur de l'évidement 8), la distance entre la face 17 de la pièce 20 et le rail 1, donc l'axe X, est parfaitement connue : c'est cette distance 1.

La figure 1c représente la pièce 20 après serrage : la butée 2 a été retirée aisément après avoir simplement dévissé la vis 12 et aussi repoussé la butée hors de la rainure 5. L'espace entre la face 17 de la pièce 20 et le rail 1 (c'est-à-dire 1) est suffisant pour qu'un mouvement transversal de la butée 2 soit possible. Signalons que les dimensions du corps de la butée 2 étant inférieures à cette distance 1, la butée 2 n'est pas serrée par la pièce 20 contre le rail 1. De plus, la butée 2 est assez petite (ou la distance 1 assez grande) pour qu'il y ait assez de place entre la pièce 20 et le rail 1 pour désengager le doigt 9 de cette butée 2 de la rainure 5 afin de la libérer. La surface de travail est ainsi totalement libérée. On a accès sans aucun obstacle aux organes d'usinage ou de mesure en regard de la pièce 20.
Aucun règlage d'alignement n'a été nécessaire. Le bord 22 de la pièce 20 se trouve dans le plan de référence (X, Y); il est aligné parallèlement à l'axe X, à une distance 1 de celui-ci. L'erreur par rapport aux coordonnées de référence de la machine est de moins de 10µ.
Si la pièce 20 est grande, on peut utiliser deux jeux d'étaux positionnés aux quatre angles de cette pièce 20, et prévoir éventuellement plusieurs butées 2 entre deux étaux d'un même jeu. On arrive ainsi à serrer une pièce dans quatre étaux en moins de 5 minutes en la positionnant avec la précision ci-dessus.

Les figures 2a et 2b illustrent un mode de réalisation de la rainure du rail et du doigt des éléments coulissants amovibles, qui s'est révélé particulièrement avantageux pour le dispositif selon la présente invention. La forme du doigt 9 est telle qu'il peut être introduit transversalement dans la rainure 5 et que lorsqu'on exerce sur lui une poussée vers le bas en vissant la vis 12, ce doigt 9 est entraîné vers le bas de la pente inclinée 23 du rebord de la rainure 5, c'est-à-dire à la fois vers la butée 10 et vers les flans de cette rainure 5 comme illustré à la figure 2b. Ceci a une double conséquence : la butée 10 vient se presser contre la base du rail 1 et le corps 24 de l'élément amovible et coulissant vient se presser contre la face latérale 21 du rail 1. Ce doigt peut être monté sur n'importe quel élément coulissant déjà mentionné et rendre très aisé, fiable et très rapide sa fixation dans la rainure 5 et son retrait de cette rainure. Il n'est pas nécessaire de l'introduire depuis l'une des extrémités de la rainure; il peut être glissé transversalement en n'importe quel endroit de cette rainure. Il peut s'agir aussi bien d'une butée amovible permettant de référencer en hauteur la pièce à serrer, que d'un élément de liaison pour monter deux rails perpendiculairement l'un à l'autre ou d'un élément de bridage ou encore d'un cavalier portant un oeilleton de centrage.

Les flancs de la rainure 5 du rail 1 ont une forme trapézoidale ; un tel profil s'est révélé particulièrement avantageux, car il permet de faciliter et de diminuer le coût de fabrication des rails du dispositif selon la présente invention. En effet, lors de la fabrication d'un rail en acier inox avec une rainure rectangulaire de profil classique (voir figure 2c), il est difficile et dispendieux de réaliser les évidements en retrait 26.
Par contre, comme schématisé aux figures 2d à 2f, il est possible d'évider une rainure à flancs trapézoidaux en trois passages de fraise, par exemple. D'autres formes polygonales sont envisageables. Elles ne seront pas forcément symétriques par rapport au plan médian du rail.

De plus, cette méthode de fabrication permet d'obtenir des rebords avec une pente interne oblique 28, et on a vu ci-dessus le rôle joué par cette dernière lors de l'immobilisation des éléments avec doigt dans la rainure. Elle permet permet aussi, dans certaines variantes, une fixation précise des étaux contre le rail, en évitant un jeu transversal.
Les parties horizontales 29 peuvent jouer le rôle de surface d'appui pour certains types d'éléments à doigts, comme illustré à la figure 2g.

En effet, cette figure 2g est la coupe d'un élément présentant deux butées 28 disposées de part et d'autre d'un doigt 9 mobile. Celui-ci peut être du même type que celui représenté aux figures 2a et 2b. La coupe est réalisée dans un plan vertical passant par l'une de ces butées 28. L'élément 24 ne présente plus de butée 14. Lorsque le doigt 9 a été poussé le long de la pente inférieure 23 en actionnant la vis 12 (non représentée à la figure 2g), les butées 28 viennent se plaquer contre la surface d'appui supérieure 29, tandis que le corps 24 vient se presser contre le rail 1. Cette variante a un grand avantage: il n'y aplus de butées formant relief à la base du rail. Le plan de référence est ainsi libre de tout obstacle. Tous les organes de fixation se trouvent dans la rainure.
Il serait aussi envisageable que le doigt s'appuie sur la pente oblique supérieure tandis que les butées s'appuient contre la surface d'appui 29 inférieure.

La figure 2h illustre une troisième variante possible., Cette fois, l'élément amovible 24 présente une butée 50 prolongeant sa face supérieure. Lorsque le doigt 9 a été poussé le long de la pente inférieure 23, en actionnant la vis 12, cette butée 50 vient se plaquer contre la face supérieure du rail 1; le corps 24 de l'élément vient se presser contre la face du rail 1 portant la rainure 5. Dans le cas d'un élément de liaison, cette variante peut également être très satisfaisante lorsqu'on désire éliminer toute excroissance par rapport au plan défini par la base du rail 1.

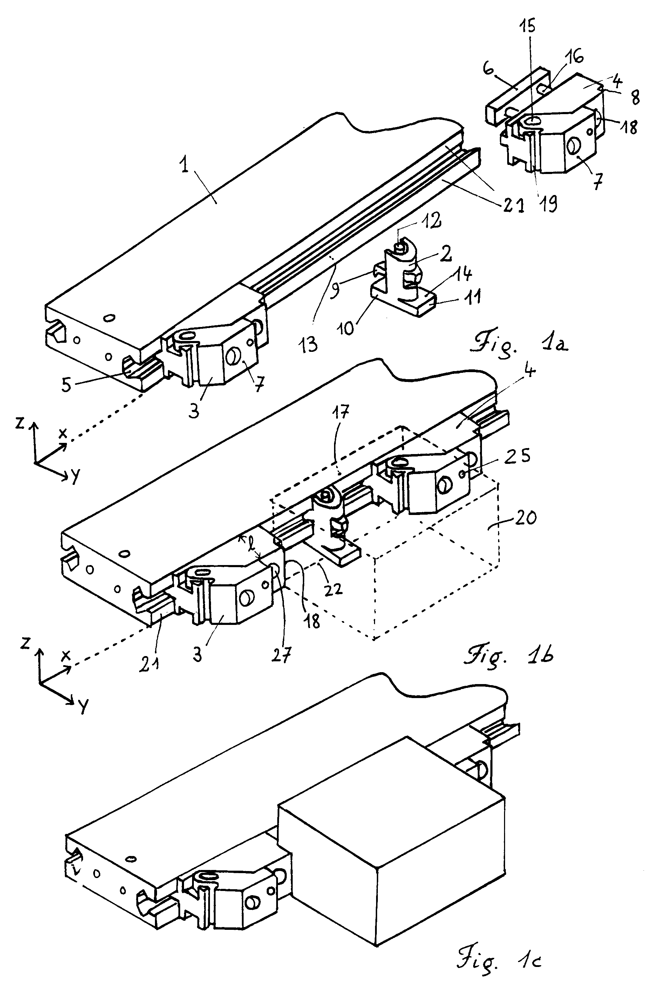

La figure 3a représente une portion d'un rail de référence 1 fixé sur deux piliers en granit montés en parallèle sur la table de travail (non représentée) d'une machine à commande numérique. Seul le pilier 30 est illustré. L'arête 31 de la base 32 de ce rail est alignée avec précision selon l'un des axes de référence de la machine. Pour cet exemple, il s'agit de l'axe X. La base 32 est confondue avec le plan de référence défini par cet axe X et un autre axe de référence, ici l'axe Y. Un rail 37 est sur le point d'être relié au rail 1, perpendiculairement à ce dernier. La base d'un élément de liaison 33 est prolongée par deux épaulements 35 et 36. Cet élément présente aussi deux doigts dont seul l'un, le doigt 34, est visible sur la figure. Ces doigts et l'épaulement 35 jouent le même rôle que le doigt 9 et l'épaulement 10 du support-butée 2 décrit en regard des figures 1 ou de l'élément 24 décrit en référence aux figures 2.

La figure 3b représente les éléments ci-dessus après assemblage. On appuye la base du rail 37 sur la butée 36 de l'élément de liaison 33; cette base sera ainsi dans le même plan que la face supérieure de cette butée 36. On fixe le rail 37 dans cette position en agissant sur les vis 40 et 41 qui viennent coopérer avec les organes 57 et 58 de l'élément de liaison 33. Puis on introduit les doigts 34 de l'élément 33 dans la rainure 5 du rail de référence 1 et on les immobilise en agissant sur les vis 38 et 39, comme décrit en regard des figures 2. La butée 35 est venue se plaquer sous le rail 1. La face supérieure de la butée 36 est dans le prolongement de celle de la butée 35 et est donc maintenant, elle aussi, dans le plan de référence, ainsi que la base du rail 37.

Comme le rail de référence 1, le rail 37 présente deux rainures 42 et 43 longitudinales au milieu de chacun de ses côtés. Remarquons qu'elles n'interviennent pas dans sa liaison avec le rail 1. Mais comme il peut être souhaitable de fixer une pièce 28 en ayant recours à des étaux ou à des blocs de bridage situés à angle droit, il est avantageux d'utiliser un rail 37 ayant une rainure 42 de même profil et situé à la même distance de la base du rail 37 que la rainure 5 du rail 1.

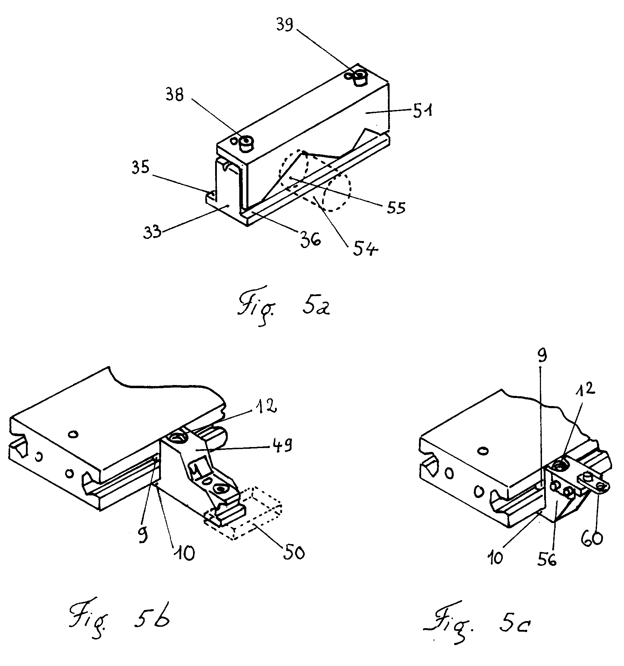

Les figures 4 et 5 rassemblent divers types d'éléments coulissants et amovibles, tous munis d'au moins un doigt 9 ou 34 coopérant avec une butée (10 ou 35) permettant une mise en place et un démontage rapides sur les rails du dispositif selon la présente invention. Comme décrit ci-dessus, il suffit d'introduire transversalement le doigt dans la rainure et de l'en ressortir de même, et de visser ou dévisser la ou les vis (12 ou 38 et 39) agissant sur la position du doigt mobile verticalement.

L'élément 33, déjà décrit à la figure 3a, comporte des orifices qui lui permettent d'y fixer des brides 44 et 45 afin de maintenir une pièce s'appuyant sur la butée 36. Des cales 46 peuvent être intercalées entre l'élément 33 et les brides 44 et 45 (Figures 4a et 4b).
Pour maintenir une pièce à usiner mince 50, on peut utiliser un ou plusieurs éléments-butées 49 (Figures 4c et 5b).

Pour maintenir une pièce cylindrique 54 on peut utiliser le même bloc de bridage 33 décrit ci-dessus avec une attache 51 vissée directement sur lui. L'une des bases plates et circulaires de la pièce 54, la base 55, est maintenue verticalement contre l'élément 33 par serrage entre l'attache 51 et la butée 36 (Figure 5a).

Un organe utilisé en cours d'usinage, tel l'oeilleton de centrage 60, peut être monté sur un cavalier 56, lui aussi muni d'un doigt 9 mobile grâce à une vis 12 et d'une butée 10 déjà décrite ci-dessus.

La figure 7 montre un rail 63 monté directement sur le pilier 30 dont la rainure est parallèle à l'axe Y. Grâce à ses deux évidements longitudinaux 64 et 65, le rail 63 peut se déplacer parallèlement à l'axe X avant d'être maintenu en position par les organes 66 et 67. la rainure 68 ménagée à l'extrémité de ce rail 63 est parallèle à l'axe Y. On peut ainsi avoir deux rainures latérales perpendiculaires sans devoir réaliser le montage indiqué à la figure 3 . Le rail 63 est ainsi disposé le long du rail 1 de référence sans recourir à un élément de liaison. Il ne s'appuie plus sur la butée d'un tel élément, mais repose directement sur le pilier. Ce montage est ainsi plus simple, plus rapide et plus rigide ; ceci permet de soutenir efficacement de lourdes pièces en ayant recours à des étaux ou à des blocs de bridage situés à angle droit.

Les exemples ci-dessus montrent que pour pouvoir fixer en la référençant en hauteur, une pièce à usiner ou à mesurer, grâce au dispositif de la présente invention, il suffit qu'elle comporte une surface plane le long de l'un de ses bords, ou sur une partie de sa base au moins , de façon à pouvoir s'appuyer sur l'épaulement des divers cavaliers prévus dans le dispositif. Ceci permet de référencer la pièce selon l'un des axes de référence de la machine, en général l'axe vertical Z, et de l'orienter avec précision par rapport à un plan de référence, en général le plan horizontal (X,Y) défini par les deux autres axes X et Y de la machine.
Ainsi on peut fixer aussi bien des pièces dont deux faces adjacentes forment un dièdre droit que des cylindres, par exemple. Le dispositif de la présente invention est donc très utile pour fixer une pièce destinée à être usinée ou mesurée sur une machine à commande numérique après l'avoir alignée selon les coordonnées de référence de cette machine, pour autant que seules de faibles contraintes soient exercées sur la pièce.
Les rails et les différents types de cavaliers sont réalisés dans un matériau suffisamment robuste et rigide pour permettre de suspendre des pièces lourdes entre les rails du dispositif en les faisant reposer sur les butées des cavaliers ou en les maintenant par serrage, tel un acier inox de bonne rigidité, par exemple.

Certains des avantages du dispositif selon la présente invention ont déjà été mentionnés ci-dessus.
Ainsi, il permet de dégager totalement la surface d'usinage en permettant d'accéder librement aux organes de la tête d'usinage ou de mesure, en contact ou très proches de cette surface. Il n'est plus nécessaire de commander la remontée de la tête. On peut usiner sans problèmes sur les bords de la pièce. Tout risque de collisison avec des obstacles, tels les différents éléments d'outillage fixés au-dessus des rails des dispositifs connus, est éliminé.

De plus, pour certaines variantes, tous les organes de fixation sont situés dans la rainure des rails. On supprime ainsi tout obstacle ou protubérance sous la base des rails , c'est-à-dire sous le plan de référence.
Le montage et démontage des différents éléments servant à immobiliser la pièce est rapide et aisé.

L'alignement de la pièce selon les coordonnées de référence de la machine est réalisé sans aucun réglage. Il suffit de régler la position du rail de référence une fois pour toutes. Il n'est pas nécessaire d'utiliser une station de préréglage, d'où un important gain de temps, de main d'oeuvre et de place.

Les rainures ménagées dans les rails de ce dispositif peuvent, selon certains modes d'exécution, être rèalisées à faible coût , par seulement trois fraisages successifs, par exemple.

Un autre avantage de ce dispositif est sa modularité, sa souplesse et son caractère évolutif : seuls quelques types d'éléments coulissants pouvant être combinés entre eux sont suffisants pour maintenir des pièces de dimensions et de formes très variées. De nombreuses pièces , de formes et de dimensions très variées, peuvent être montées en série sur le même rail, grâce en partie au faible encombrement des étaux du présent dispositif. Ce dispositif peut être monté sur tous les types de machines. On peut concevoir d'autres types de cavaliers aptes à maintenir des pièces de formes particulières ou divers organes devant être fixés dans la zone d'usinage ou de mesure. Les divers éléments de ce dispositif peuvent être combinés avec ceux de systèmes conventionnels. Il permet ainsi de maintenir la pièce aussi bien par serrage entre des étaux, que par bridage, ou en combinant le serrage par étau et le serrage par bridage, ou par serrage entre une butée et une attache de bridage ou encore par serrage et appui sur une butée.

## Revendications

1. Machine d'usinage ou de mesure à commande numérique présentant un dispositif pour positionner une pièce (20) selon le système de référence de cette machine et serrer cette pièce (20) en position, comportant
- un rail (1) de référence présentant au moins une rainure (5) latérale et destiné à coopérer avec des moyens (30) agencés pour que sa face inférieure (32) soit positionnée dans un plan de référence défini par deux axes de coordonnées (X, Y) du système de référence de la machine,
- des cavaliers (3,4) comportant des organes (6, 16, 27) agencés pour coopérer avec cette rainure (5) de manière à pouvoir soit coulisser, soit être immobilisés le long de ce rail (1) de référence et présentant un mors (7) agencé de manière à maintenir en étau, latéralement, la pièce (20) à fixer, ainsi que
- au moins un support-butée (2) amovible, comportant
a) un doigt (9) agencé pour coopérer avec la rainure (5) du rail (1) de référence de manière à pouvoir soit coulisser, soit être fixé le long de ce dernier et profilé de manière appropriée pour pouvoir être retiré de cette rainure (5), selon un mouvement transversal à cette dernière, une fois que la pièce (20) à fixer est serrée, et
b) une butée (11) destinée à soutenir la pièce (20) avant et pendant son serrage, et agencée de manière que sa face supérieure (14) vienne se placer dans le plan de référence lorsque ce support-butée (2) est fixé le long du rail (1).

2. Machine selon la revendication 1, dans laquelle la rainure (5) du rail (1) de référence est parallèle à la face inférieure (32) de ce rail (1).

3. Machine selon la revendication 1, comportant aussi au moins un deuxième rail (37) , mobile, destiné à être monté parallèlement ou perpendiculairement au rail (1) de référence, ayant une section de même géométrie que celle de ce dernier et pourvu d'au moins une rainure (42) latérale de même profil que celle du rail (1) de référence.

4. Machine selon l'une des revendications 1 à 3, comportant aussi au moins un rail (63) destiné à être monté sans rail de référence, de manière que sa face inférieure soit positionnée dans le plan de référence (X,Y), et muni à au moins l'une de ses extrémités d'une rainure (68) parallèle à sa face inférieure et de même profil que la rainure (5) du rail (1) de référence.

5. Machine selon l'une des revendications 1 à 4, comportant un rail (1, 63), destiné à être monté sans rail de référence, de manière que sa face inférieure soit positionnée dans le plan de référence (X, Y), et évidé de sa face supérieure à sa face inférieure selon un profil (64, 65) permettant de régler facilement son positionnement en le faisant coulisser selon les axes (X, Y).

6. Machine selon la revendication 3, comportant aussi au moins un élément (33) de liaison apte à maintenir un rail (37) perpendiculairement au rail (1) de référence ou à un autre rail déjà en position de référence, de façon que leurs faces inférieures soient dans un même plan.

7. Machine selon la revendication 6, dans laquelle l'élément (33) de liaison est coulissant et comporte une butée (35, 36) prolongeant de part et d'autre sa face inférieure , des moyens (57, 58) permettant de fixer contre l'une de ses faces latérales, l'extrémité d'un rail (37) du dispositif et au moins deux doigts (34) jaillissant de sa face latérale opposée, cette butée (35) et ces doigts (34) étant agencés pour que les doigts (34) puissent coulisser et être fixés dans la rainure (5) d'un rail (1) déjà en position de référence tandis que la butée (35, 36) vient se plaquer contre la face inférieure (32) de ce rail (1) et celle du rail (37) fixé auparavant à cet élément (33).

8. Machine selon l'une des revendications précédentes, dans laquelle au moins l'un des deux rebords de la rainure (5) présente une surface d'appui oblique (23) pour les doigts des accessoires coulissants de ce dispositif, tels les supportsbutées amovibles (2) et les éléments de liaison (33), et dans laquelle ces doigts (9, 34) sont profilés de manière
- à pouvoir entrer et sortir d'une rainure (5) ménagée dans les rails (1) par un mouvement transversal à cette dernière,
- à pouvoir coulisser facilement le long de cette rainure (5), et
- à pouvoir être immobilisés avec précision en place dans cette rainure (5), lorsqu'une force de poussée, apte à plaquer les doigts (9, 34) contre la surface d'appui (23) oblique présentée par l'un des rebords de la rainure (5), est appliquée à ces accessoires (2, 33).

9. Machine selon la revendication 8, dans laquelle les accessoires coulissants (2, 33) sont agencés de manière que l'une de leurs faces latérales vienne se plaquer contre la face latérale (21) du rail (1) dans laquelle est ménagée la rainure (5), lorsque son ou ses doigts (9, 34) sont immobilisés dans celle-ci.

10. Machine selon la revendication 8, dans laquelle les accessoires coulissants (2, 33) présentent au moins un épaulement (10, 35, 50) et au moins un doigt (9, 34) mobile par rapport à ce dernier, agencés pour coopérer de manière que, lorsque ce doigt (9, 34) est immobilisé dans la rainure (5) d'un rail (1), cet épaulement (10, 35, 50) vienne se plaquer, soit contre la face supérieure, soit contre la face inférieure de ce rail (1).

11. Machine selon la revendication 8, dans laquelle les accessoires coulissants (2, 33, 24) présentent deux butées (28) situées dans un même plan, de part et d'autre d'un doigt (9, 34) mobile par rapport à ces dernières, ces éléments étant agencés pour coopérer de manière que, lorsque ce doigt (9, 34) est immobilisé dans la rainure (5) d'un rail (1) , ces butées (28) viennent se plaquer contre une surface d'appui (29) présentée par l'un des rebords de cette rainure (5).

12. Machine selon l'une des revendications précédentes, dans laquelle les parties des accessoires coulissants du dispositif, tels les supports-butées amovibles (2) et les éléments de liaison (33), qui dépassent des faces supérieures et inférieures des rails (1, 37) une fois que ces accessoires sont fixés sur ceux-ci, sont profilées de manière à ne présenter aucun angle vif.

13. Machine selon l'une des revendications 1 à 12 , comportant aussi un accessoire coulissant (56) présentant
- un doigt (9) selon la revendication 8,
- une butée (10) ménagée sur sa face latérale d'où jaillit le doigt (9), et agencée de manière à venir se plaquer contre une surface d'appui ménagée sur le rail (1, 37) lorsque le doigt (9) est immobilisé dans la rainure (5) du rail (1, 37)
- ainsi qu'un oeilleton de centrage (60) prolongeant sa face supérieure du côté opposé à celui du doigt (9) et de la butée (10).

14. Machine selon l'une des revendications 1 à 13, comportant aussi un accessoire coulissant (49) présentant
- un doigt (9) selon la revendication 8,
- une butée (10) prolongeant sa face inférieure du côté d'où jaillit le doigt (9) et agencée de manière à venir se plaquer sous le rail (1, 37) lorsque le doigt (9) est immobilisé dans la rainure (5) du rail (1, 37) à une position donnée,
- ainsi qu'un épaulement jaillissant du côté opposé à celui terminé par la butée (10) et se prolongeant dans le même plan que celle-ci, cet épaulement étant agencé pour recevoir une bride, de manière à maintenir la base d'une pièce (50) de faible épaisseur dans le plan de référence.

15. Machine selon l'une des revendications 1 à 14, dans laquelle la force de poussée apte à immobiliser les éléments coulissants (9, 33, 49, 56) dans une rainure (5) est exercée par l'enfonçage d'une vis (12, 38, 39).

16. Utilisation d'une machine selon les revendications 1 à 15, dans laquelle un rail de référence (1) présentant au moins une rainure latérale (5) ainsi que des moyens (30) agencés pour que sa face inférieure (32) soit positionnée dans un plan de référence défini par deux axes (X, Y) de coordonnées du système de référence de la machine, est fixé sur la base d'une machine d'usinage ou de mesure à commande numérique, de manière que sa rainure latérale (5) soit parallèle à l'un de ces axes (X, Y).

## Claims

1. Numerically-controlled machine tool or measuring machine provided with a device to position a workpiece (20) according to the reference system of this machine and to clamp said workpiece (20) in position, comprising:
- a reference rail (1) having at least one lateral groove (5) and provided to work with means (30) for positioning its underface (32) in a reference plane defined by two coordinate axes (X,Y) of the reference system of this machine,
- sliding vices (3,4) comprising components (6,7,27) designed to work with this groove (5) either in sliding or in being locked along this reference rail (1) and provided also with a jaw (7) arranged to clamp laterally the workpiece (20) to be clamped and
- at least one removable sustaining-stop (2) which comprises
a) a finger (9) designed to work with the groove (5) in the reference rail (1) either in sliding or in being locked along this reference rail (1) and profiled for being able to be removed from this groove (5) by a transverse movement to the latter, once the workpiece (20) is clamped in position, and
b) a stop (11) designed to hold the workpiece (20) before and during its clamping, such that its upperface (14) is positioned in the reference plane when this sustaining-stop (2) is locked along the rail (1).

2. Machine according to claim 1, in which the groove (5) in the reference rail (1) is parallel to the underside (32) of this rail (1).

3. Machine according to claim 1, comprising also at least one second rail (37) which is mobile and designed to be mounted in parallel or perpendicular to the reference rail (1), having a section with the same geometry as the section of the latter and provided with at least one lateral groove (42) of the same profile as the groove of the reference rail (1).

4. Machine according to one of the claims 1 to 3, also comprising at least one rail (63) designed to be mounted without reference rail, in such a manner that its underface is positioned in the reference plane (X,Y), which rail (63) is provided on at least one of its ends with a groove (68) parallel to its underface and of the same profile as the groove (5) in the reference rail (1).

5. Machine according to one of the claims 1 to 4, comprising one rail (1,63) designed to be mounted without reference rail, in such a manner that its underface is positioned in the reference plane (X,Y), and hollowed out from its upperface to its underface according to a cavity having a profile (64,65) allowing for easy adjustment of its position, by letting it sliding along the reference axes (X,Y).

6. Machine according to claim 3, also comprising at least one linkage element (33) to hold a rail (37) perpendicular to the reference rail (1) or to another rail already fastened in the reference position, in such a manner that their underfaces are in the same plane.

7. Machine according to claim 6, in which the linkage element (33) is able to slide and is provided with a stop (35,36) extending on either side of its underface, with means (57,58) for fastening one end of the rail (37) against one of its lateral faces and with at least two fingers (34) projecting from its opposite lateral face, this stop (35) and these fingers (34) being arranged such that the fingers (34) can slide and be locked in the groove (5) of the reference rail (1) already fastened in the reference position, whilst the stop (35,36) is pressing against the underface of this rail (1) and the underface of the rail (37) previously fixed to this element (33).

8. Machine according to one of the preceding claims, in which at least one of the two edges of the groove (5) is provided with an oblique bearing surface (23) for the fingers of the sliding accessories of the device to position and to clamp the workpiece (20), such as the removable sustaining-stops (2) and the linkage elements (33), and in which these fingers (9,34) are profiled such that
- they can be moved in and out of the groove (5) provided in the reference rails (1) by a movement transverse to this groove,
- they can slide easily along this groove (5), and
- they can be locked in position with precision in this groove (5), when a thrust strenght, pressing the fingers (9,34) against the oblique bearing surface (23) provided on one of the edges of the groove (5), is applied to these accessories (2,33).

9. Machine according to claim 8, in which the sliding accessories (2,33) are designed such that one of their lateral faces presses against the lateral face (21) of the rail (1) in which is provided the groove (5), when its finger(s) (9,34) are locked in this groove.

10. Machine according to claim 8, in which the sliding accessories (2,33) are provided with at least one shoulder (10,35,50) and at least one finger (9,34) which can move in relation to the latter, which are designed to work together such that, when this finger (9,34) is locked in the groove (5) of a rail (1), this shoulder (10,35,50) is pressing against either the upperface or the underface of this rail (1).

11. Machine according to claim 8, in which the sliding accessories (2,33,24) are provided with two stops (28) situated in the same plane on either side of a finger (9,34) which can move in relation to them, which are designed to work together such that, when this finger (9,34) is locked in the groove (5) of a rail (1), these stops (28) are pressing against a bearing surface (29) provided on one of the edges of this groove (5).

12. Machine according to one of the preceding claims, in which the parts of the sliding accessories of the device to position and to clamp the workpiece (20), such as the removable sustaining-stops (2) and the linkage elements (33), which are protruding from the upperfaces and the underfaces of the rails (1,37) after these accessories being fastened on these rails, are profiled without presenting any sharp angle.

13. Machine according to one of the claims 1 to 12, also comprising a sliding accessorie (56) with
- a finger (9) according to claim 8,
- a stop (10) provided on its léateral face from which the finger (9) is prodruding and arranged such that it presses against a bearing surface provided on the rail (1,37) when the finger (9) is locked in the groove (5) of the rail (1,37)
- and a centering eye (60) extending on its upperface, on the side opposite to the finger (9) and the stop (10).

14. Machine according to one of the claims 1 to 13, also comprising a sliding accessorie (49) with
- a finger (9) according to claim 8,
- a stop (10) extending on its underface, on the side from which the finger (9) is protruding, said stop being arranged such that it presses against the underface of the rail (1,37) when the finger (9) is locked in the groove (5) of the rail (1,37), at a given position,
- and a shoulder protruding from the side opposite to this ending in the stop (10) and extending in the same plane as this stop, this shoulder being designed to take a clamp, in order to hold the base of a thin workpiece (50) in the reference plane.

15. Machine according to one of the claims 1 to 14, in which the thrust strenght able to press the sliding accessories (9,33,49,56) in a groove (5) is exerted by sinking in of a screw (12,38,39).

16. Use of a machine according to the claims 1 to 15, in which a reference rail (1) with at least one lateral groove (5) such as means (30) for positioning the underface (32) of said rail in a reference plane defined by two coordinate axes (X,Y) of the reference system of this machine, is fastened on the base of a numerically-controlled machine tool or measuring machine, such that its lateral groove (5) is parallel to one of these coordinate axes (X,Y).

## Patentansprüche

1. Numerisch gesteuerte Maschine zum Bearbeiten oder Messen mit einer Befestigungsvorrichtung zum Positionieren eines Werkstücks (20) entsprechend dem Bezugssystem dieser Maschine und zum Halten dieses Werkstücks (20) in Position, umfassend
- eine festehende Bezugsschiene (1), die wenigstens eine seitliche Nut (5) aufweist, die mit Mitteln (30) zum Positionieren ihrer Unterseite (32) in der durch zwei Bezugsachsen (X,Y) der Maschine definierten Bezugsebene ausgebildet ist,
- Reiter (3,4), die Organe (6,16,27) aufweisen, die mit der Nut (5) zum Verschieben und zum Festspannen längs der Bezugsschiene (1) ausgebildet sind, wobei diese Reiter (3,4) ein Backenteil (7) zum seitlichen Klemmen des zu befestigenden Werkstücks (20) aufweisen und
- wenigstens einen abnehmbaren Trägeranschlag (2), der
a) einen Finger (9) zum Eingriff mit der Nut (5) der Bezugsschiene (1) aufweist, um längs letzterer verschiebbar und festsetzbar zu sein, und der so profiliert ist, dass er aus dieser Nut (5), einer zu letzterer transversalen Bewegung entsprechend, herausziehbar ist, wenn das zu befestigende Werkstück (20) gespannt ist, und
b) einen Anschlag (11) zum Stützen des Werkstücks (20) vor und während des Spannens, der derart ausgebildet ist, dass seine Oberseite (14) sich in der Bezugsebene stellt, wenn dieser Trägeranschlag (2) längs der Schiene (1) befestigt wird, aufweist.

2. Maschine nach Anspruch 1, in welcher die Nut (5) der Bezugsschiene (1) parallel zur Unterseite (32) dieser Bezugsschiene (1) ist.

3. Maschine nach Anspruch 1, die ferner wenigstens eine zweite, mobile Schiene (37) zum parallelen oder senkrechten Montieren zur Bezugsschiene (1) aufweist, die einen Querschnitt mit gleicher Geometrie wie die Bezugsschiene (1) aufweist und mit wenigstens einer seitlichen Nut (42) desgleichen Profils wie diejenige der Bezugsschiene (1) versehen ist.

4. Maschine nach einem der Ansprüche 1 bis 3, die ferner wenigstens eine weitere, zum Montieren ohne Bezugsschiene vorgesehene Schiene (63) aufweist, so dass ihre Unterseite sich in der Bezugsebene (X,Y) stellt und wobei diese Schiene (63) an mindestens einem ihrer Ende mit einer Nut (68) versehen ist, die parallel zu ihrer Unterseite ist und desgleichen Profils wie die Nut (5) der Bezugsschiene (1) hat.

5. Maschine nach einem der Ansprüche 1 bis 4, die eine, zum Montieren ohne Bezugsschiene vorgesehene Schiene (1,63) aufweist, so dass ihre Unterseite sich in der Bezugsebene (X,Y) stellt und die eine von ihrer Oberseite zur Unterseite durchbrechende, mit einem, eine leichte Einstellung ihrer Befestigungsstelle bei Verschieben dieser Schiene (1,63) längs den Bezugsachsen (X,Y) erlaubenden Profil (64,65) ausgebildete Aushölung aufweist.

6. Maschine nach Anspruch 3, die ferner wenigstens ein Verbindungselement (33) zum Halten einer Schiene (37) senkrecht zur Bezugsschiene (1) oder zur einer anderen, schon in einer Bezugsposition befestigten Schiene, so dass ihre Unterseiten sich in der gleichen Ebene befinden.

7. Maschine nach Anspruch 6, in welcher das Verbindungselement (33) ein Kulissenelement ist, das einen nach beiden Seiten verlängerten Anschlag (35,36) an seiner Unterseite, Mittel (57,58) zum Spannen einer Ende einer Schiene (37) gegen eine ihrer Seitenfläche und wenigstens zwei Finger (34) aufweist, die sich von der gegenübergesetzten Seitenfläche aus erstrecken, wobei dieser Anschlag (36) und diese Finger (34) derart ausgebildet sind, das die Finger (34) in der Nut (5) einer bereits in Bezugsposition befestigten Schiene (1) verschiebbar und festlegbar sind, während der Anschlag (35,36) an die Unterseite (32) dieser Schiene (1) und an die Unterseite der bereits an diesem Element (33) befestigten Schiene (37) in Anlage gelangt.

8. Maschine nach einem der Ansprüche 1 bis 7, in welcher wenigstens einer der beiden Randbereiche der Nut (5) eine schräge Anlagefläche (23), für die Finger der Kulissenelemente der Befestigungsvorrichtung aufweist, wie diejenige der abnehmbaren Trägeranschläge (2) und der Verbindungselemente (33), und in welcher diese Finger (9,34) derart profiliert sind, dass sie
- durch eine transversale Bewegung zur in den Schienen (1) vorgesehenen Nut (5) in diese einführbar und aus diese herausnehmbar sind,
- leicht längs dieser Nut (5) verschiebbar sind und
- mit Präzision in dieser Nut (5) festlegbar sind, wenn eine, die Finger (9,34) gegen die schräge, in einem der beiden Randbereiche der Nut (5) vorgesehene Anlagefläche (23) anlegende Druckkraft gegen diese Elemente (2,33) ausgeübt wird,

9. Maschine nach Anspruch 8, in welcher die Kulissenelemente (2,33) derart ausgebildet sind, dass eine ihrer beiden Seitenflächen sich gegen die, die Nut (5) aufweisende Seitenfläche (21) der Schiene (1) in Anlage gelangt, wenn ihrer oder Ihre Finger (9,34) in dieser Nut (5) festgelegt sind.

10. Maschine nach Anspruch 8, in welcher die Kulissenelemente (2,33) wenigstens einen Anschlag (10,35,50) und einen bezüglich dieses Anchlags beweglichen Finger (9,34) aufweisen, die zur Mitwirkung vorgesehen sind, derart dass dieser Anschlag (10,35,50) entweder gegen die Oberseite oder gegen die Unterseite einer Bezugsschiene (1) in Anlage gelangt, wenn dieser Finger (9,34) in der Nut (5) dieser Bezugsschiene (1) festgestellt wird.

11. Maschine nach Anspruch 8, in welcher die Kulissenelemente (2,33,24) zwei sich in der gleichen Ebene, auf beiden Seiten eines Fingers (9,34), befindliche Anschläge (28) aufweisen, wobei der Finger (9,34) bezüglich dieser Anschläge (28) beweglich ist und diese Elemente zur Mitwirkung vorgesehen sind, derart dass, wenn dieser Finger (9,34) in der Nut (5) einer Bezugsschiene (1) festgestellt wird, diese Anschläge (28) gegen eine, in einem der Randbereiche dieser Nut (5) vorgesehene Anlagefläche (29) in Anlage gelangen.

12. Maschine nach einem der Ansprüche 1 bis 11, in welcher die Teile der Kulissenelemente der Befestigungsvorrichtung , wie die abnehmbaren Trägeranschläge (2) und die Verbindungselemente (33), die sich von den Oberseiten und Unterseiten der Schienen (1,37) aus erstrecken, wenn diese Elemente auf diesen Schienen festgestellt werden, keinen scharfen Winkel aufweisen.

13. Maschine nach einem der Ansprüche 1 bis 12, die ferner ein Kulissenzubehör (56) aufweist, mit
- einem Finger (9) gemäss Anspruch 8,
- einem Anschlag (10) an der Seite, an der der Finger (9) hervorbricht, zur Anlage an einer Anlagefläche auf der Schiene (1) wenn der Finger (9) in der Nut (5) der Schiene (1) festliegt, und mit
- einer Zentrieröse (60) die seine Oberseite an der, dem Finger (9) und dem Anschlag (10) abgewandten Seite verlängert.

14. Maschine nach einem der Ansprüche 1 bis 13, die ferner ein Kulissenzubehör (49) aufweist, mit
- einem Finger (9) gemäss Anspruch 8,
- einem Anschlag (10), der seine Unterseite zu der Seite wo der Finger (9) hervorbricht, verlängert und durch Festlegen des Fingers (9) in einer vorgegebene Position in der Nut (5) der Schiene (1,37), an der Unterseite der Schiene (1,37) anliegt, und mit
- einer Schulter, die zur gegenüber Seite hervorbricht bezüglich der im Anschlag (10) endenden Schulter, und die sich in der gleichen Ebene wie dieser Anschlag (10) erstreckt, wobei durch diese Schulter eine Klammer zum Halten der Grundfläche eines Werkstückes (50) geringer Dicke in der Bezugsebene aufnehmbar ist.

15. Maschine nach einem der Ansprüche 1 bis 14, in welcher die die Kulissenelemente (9,33,49,56) in einer Nut (5) festlegende Druckkraft, durch Einschrauben einer Schraube (12,38,39) ausgeübt wird.

16. Verwendung einer Maschine nach einem der Ansprüche 1 bis 15, in welcher eine, mindestens eine seitliche Nut (5), sowie Mitteln (30) zum Positionieren ihrer Unterseite (32) in der durch zwei Bezugsachsen (X,Y) der Maschine definierten Bezugsebene, aufweisende Bezugsschiene (1) auf der Grundfläche einer numerisch gesteuerten Maschine zum Bearbeiten oder Messen festgelegt ist, so dass ihre seitliche Nut (5) parallel zu einem dieser Achsen (X,Y) ist.
